# EUROPEAN PATENT APPLICATION

(11) **EP 4 451 226 A1**
(43) Date of publication of application: **23.10.2024**
(21) Application number: 24170530.0
(22) Date of filing: 16.04.2024
(51) Int. Cl.: G06V 10/25, G06V 10/74, G06V 10/764, G06V 10/82, G06V 20/58

(54) **OBJECT DETECTION METHOD, ELECTRONIC DEVICE, STORAGE MEDIUM, AND VEHICLE**

(30) Priority: 17.04.2023 CN 202310424494
(71) Applicant: Anhui NIO Autonomous Driving Technology Co., Ltd., Hefei, Anhui 230601 (CN)
(72) Inventor: Wang, Xiaolian, Hefei, 230601 (CN); Ren, Shaoqing, Hefei, 230601 (CN)
(74) Representative: Vossius & Partner Patentanwälte Rechtsanwälte mbB

(57) **Abstract**

The disclosure relates to the field of image detection technologies, and specifically provides an object detection method, an electronic device, a storage medium, and a vehicle, to resolve a technical problem that an existing object detector cannot detect a particular object or has low detection precision. The object detection method of the disclosure includes: obtaining an image to be detected and an object image; detecting the image to be detected, to obtain a first detection result; and obtaining a second detection result based on the first detection result and the object image. In this way, a particular object is detected, and object detection precision is improved.

## Description

The present application claims priority of CN patent application 202310424494.5 filed on April 17, 2023 with the title "Object detection method, electronic device, storage medium, and vehicle".

### Technical Field

The disclosure relates to the field of image detection technologies, and specifically provides an object detection method, an electronic device, a storage medium, and a vehicle.

### Background Art

Currently, an object detection technology is one of basic applications in the computer vision field, and is usually used to recognize and locate an object of interest in an image.

Based on a detection granularity of an existing object detector, only detection of an object category can be implemented, and detection of a particular object cannot be implemented, or detection precision for a particular object is low. Therefore, it is difficult to meet actual requirements.

Accordingly, there is a need in the art for a new solution to resolve the above problems.

### Summary

To overcome the above disadvantages, the disclosure is provided to resolve or at least partially resolve the above technical problems. The disclosure provides an object detection method, an electronic device, a storage medium, and a vehicle.

According to a first aspect, the disclosure provides an object detection method. The method includes: obtaining an image to be detected and an object image; detecting the image to be detected, to obtain a first detection result; and obtaining a second detection result based on the first detection result and the object image.

In an implementation, the detecting the image to be detected, to obtain a first detection result includes: inputting the image to be detected into a detection model, to obtain a third detection result; and filtering the third detection result based on the object image, to obtain the first detection result.

In an implementation, the third detection result includes a detection result of each detection object in the image to be detected, and the detection result of each detection object includes a category and a probability. The filtering the third detection result based on the object image, to obtain the first detection result includes: determining whether the category of each detection object in the third detection result is the same as a category of the object image; if the category of each detection object in the third detection result is not the same as the category of the object image, eliminating a detection result different from the category of the object image from the third detection result; comparing the probability of the detection object in the third detection result with a first threshold; and determining the first detection result based on a comparison result.

In an implementation, the determining the first detection result based on a comparison result includes: when the probability of the detection object is less than the first threshold, eliminating the detection result of the detection object from the third detection result, to obtain the first detection result.

In an implementation, the first detection result includes a detection box of a detection object. The obtaining a second detection result based on the first detection result and the object image includes: extracting, based on the detection box, each detection object image from the image to be detected; and determining the second detection result based on a similarity between each detection object image and the object image.

In an implementation, the determining the second detection result based on a similarity between each detection object image and the object image includes: inputting each detection object image into a feature extraction model, to obtain a first feature of each detection object image; inputting the object image into the feature extraction model, to obtain a second feature of the object image; and performing feature matching based on the first feature and the second feature, and determining the second detection result based on a matching result.

In an implementation, the performing feature matching based on the first feature and the second feature, and determining the second detection result based on a matching result includes: determining a cosine similarity based on the first feature and the second feature; determining whether the cosine similarity is less than a second threshold; and if the cosine similarity is less than the second threshold, eliminating a detection result of a detection object corresponding to the cosine similarity from the first detection result, to obtain the second detection result.

According to a second aspect, an electronic device is provided. The electronic device includes at least one processor and at least one storage apparatus, where the storage apparatus is configured to store a plurality of program codes, wherein the program codes are adapted to be loaded and executed by the at least one processor to perform the object detection method described in any of the above items.

According to a third aspect, a computer-readable storage medium is provided. The computer-readable storage medium stores a plurality of program codes, wherein the program codes are adapted to be loaded and executed by the at least one processor to perform the object detection method described in any of the above items.

According to a fourth aspect, a vehicle is provided. The vehicle includes a vehicle body, at least one processor, and at least one storage apparatus, where the storage apparatus is configured to store a plurality of program codes, wherein the program codes are adapted to be loaded and executed by the at least one processor to perform the object detection method described in any of the above items.

The one or more technical solutions of the disclosure described above have at least one or more of the following beneficial effects:
The object detection method of the disclosure includes: obtaining an image to be detected and an object image; detecting the image to be detected, to obtain a first detection result; and obtaining a second detection result based on the first detection result and the object image. In this way, a particular object is detected, and object detection precision is improved.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar numbers in the figures are used to represent similar components, in which:
FIG. 1 is a schematic flowchart of main steps of an object detection method according to an embodiment of the disclosure;
FIG. 2 is a schematic flowchart of obtaining a first detection result according to an embodiment;
FIG. 3 is a schematic flowchart of obtaining a second detection result based on a first detection result and an object image according to an embodiment;
FIG. 4 is a complete schematic flowchart of an object detection method according to an embodiment; and
FIG. 5 is a schematic diagram of a structure of an electronic device according to an embodiment.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

Currently, based on a detection granularity of a conventional object detector, only detection of an object category can be implemented, and detection of a particular object cannot be implemented, or detection precision for a particular object is low. Therefore, it is difficult to meet actual requirements.

Therefore, the disclosure provides an object detection method, an electronic device, a storage medium, and a vehicle. The method includes: obtaining an image to be detected and an object image; detecting the image to be detected, to obtain a first detection result; and obtaining a second detection result based on the first detection result and the object image. In this way, a particular object or an object with a particular appearance mode is detected, and object detection precision is improved.

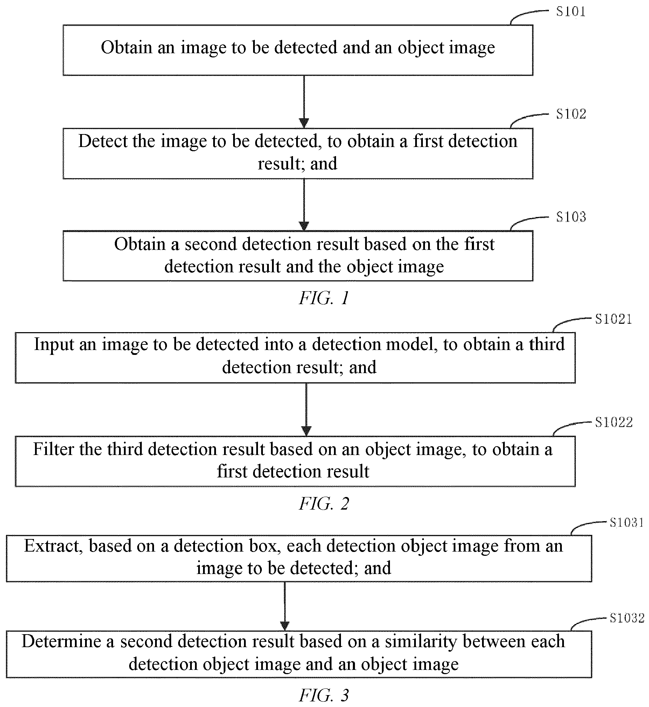

Referring to FIG. 1, FIG. 1 is a schematic flowchart of main steps of an object detection method according to an embodiment of the disclosure.

As shown in FIG. 1, the object detection method in this embodiment of the disclosure mainly includes the following step S 101 to step S 103.

Step S101: Obtain an image to be detected and an object image.

The object image is an image having a particular object or an image of an object having a particular appearance mode, for example, an image of a specific vehicle.

The image to be detected is a detected image, and may include a plurality of detection objects.

Step S 102: Detect the image to be detected, to obtain a first detection result.

The first detection result is a detection result of the detection object in the image to be detected, and includes a category, a category probability, and a detection box of a detection object that has specific similarity with the object image.

Step S103: Obtain a second detection result based on the first detection result and the object image.

The second detection result is a detection object that is filtered out from the first detection result and has large similarity with the object image.

Based on the above step S101 to step S103, the method includes: obtaining an image to be detected and an object image; detecting the image to be detected, to obtain a first detection result; and obtaining a second detection result based on the first detection result and the object image. In this way, a particular object or an object with a particular appearance mode is detected, and object detection precision is improved.

The step S102 and step S 103 are further separately described below.

Specifically, as shown in FIG. 2, step S102 may be implemented by using the following step S1021 and step S1022.

Step S1021: Input the image to be detected into a detection model, to obtain a third detection result.

In an embodiment, an R-CNN network, a Fast R-CNN network, a YOLO V5 network, or the like may be used as an example of the detection model, but the detection model is not limited thereto.

Specifically, the image to be detected is input into a pre-trained detection model, to obtain the third detection result, where the third detection result includes a category, a probability, and a detection box of each detection object in the image to be detected. The category is, for example, a vehicle, a pedestrian, an obstacle, or a lane line; the probability is a category probability of the detection object in the image to be detected, for example, a probability that a detected object is an object vehicle; and the detection box is used to describe a position of the detection object in the image to be detected.

Step S1022: Filter the third detection result based on the object image, to obtain the first detection result.

There are many manners of filtering the third detection result based on the object image, for example, a detection object that has a large difference from a category of the object image or a detection object with a small probability is eliminated from the third detection result.

In a specific implementation, the third detection result includes a detection result of each detection object in the image to be detected, and the detection result of each detection object includes a category and a probability. The filtering the third detection result based on the object image, to obtain the first detection result includes: determining whether the category of each detection object in the third detection result is the same as a category of the object image; if the category of each detection object in the third detection result is not the same as the category of the object image, eliminating a detection result different from the category of the object image from the third detection result; comparing the probability of the detection object in the third detection result with a first threshold; and determining the first detection result based on a comparison result.

Specifically, in this embodiment, a detection object whose category is different from that of the object image may be first eliminated from the third detection result, then the probability of the detection object in the third detection result is compared with the first threshold, and further, the first detection result is determined based on the comparison result.

In a specific implementation, the determining the first detection result based on a comparison result includes: when the probability of the detection object is less than the first threshold, eliminating the detection result of the detection object from the third detection result, to obtain the first detection result.

Specifically, it is sequentially determined whether the probability of each detection object in the third detection result is greater than the first threshold. If there is a case in which the probability is less than the first threshold, the detection result of the detection object is deleted from the third detection result. In this way, the first detection result can be obtained.

The first threshold is a probability threshold, and may be a value obtained in advance through experiment. In an embodiment, 0.3 may be used as an example of the first threshold.

The image to be detected is input into the detection model, to obtain the third detection result, and then the third detection result is filtered based on the object image, to obtain the first detection result. In this way, a technical support is provided for obtaining an object with an appearance mode or a particular object.

Step S102 is further described above, and step S 103 is further described below.

Specifically, as shown in FIG. 3, step S103 may be implemented by using the following step S 1031 and step S1032.

Step S 1031: Extract, based on the detection box, each detection object image from the image to be detected.

Because the detection result obtained by using the detection model includes the detection box of each detection object, an image of each detection object may be extracted from the image to be detected based on the detection box.

Step S 1032: Determine the second detection result based on a similarity between each detection object image and the object image.

It should be noted that there are many methods for calculating the similarity between the detection object image and the object image, for example, by using a CNN algorithm in opencv, or by calculating a grayscale value between the two images. In a preferred embodiment, image features of the two images are separately extracted, and a cosine similarity is calculated based on two image features as the similarity between the detection object image and the object image.

In a specific implementation, the determining the second detection result based on a similarity between each detection object image and the object image includes: inputting each detection object image into a feature extraction model, to obtain a first feature of each detection object image; inputting the object image into the feature extraction model, to obtain a second feature of the object image; and performing feature matching based on the first feature and the second feature, and determining the second detection result based on a matching result.

The feature extraction model is used to extract general features of an image, for example, a texture, an outline, and a color of the image. In an embodiment, a ResNet model, a Vision Transformer model, or the like may be used as an example of the feature extraction model.

Specifically, each detection object image and the object image are sequentially input into the feature extraction model, to obtain the first feature of each detection object image and the second feature of the object image, and feature matching is further performed on each first feature and the second feature separately, to determine the second detection result based on the matching result.

In a specific implementation, the performing feature matching based on the first feature and the second feature, and determining the second detection result based on a matching result includes: determining a cosine similarity based on the first feature and the second feature; determining whether the cosine similarity is less than a second threshold; and if the cosine similarity is less than the second threshold, eliminating a detection result of a detection object corresponding to the cosine similarity from the first detection result, to obtain the second detection result.

The cosine similarity, also referred to as a cosine similarity, refers to evaluating similarity between two vectors by calculating a cosine value of an included angle between the two vectors.

Specifically, a cosine value of an included angle between the first feature and the second feature is calculated as the cosine similarity to determine whether the cosine similarity is less than the second threshold, and the detection result of the detection object whose cosine similarity is less than the second threshold is eliminated from the first detection result, to obtain the second detection result.

The second threshold is a cosine similarity threshold, and may be a value obtained in advance through experiment. In an embodiment, 0.5 may be used as an example of the second threshold.

In this way, the similarity between the two images is further evaluated by using similarity between the two features, the detection result with small similarity is deleted, and a detection result with large similarity with the object image is retained, thereby implementing detection for an object with a particular appearance mode or a particular object, and improving object detection precision.

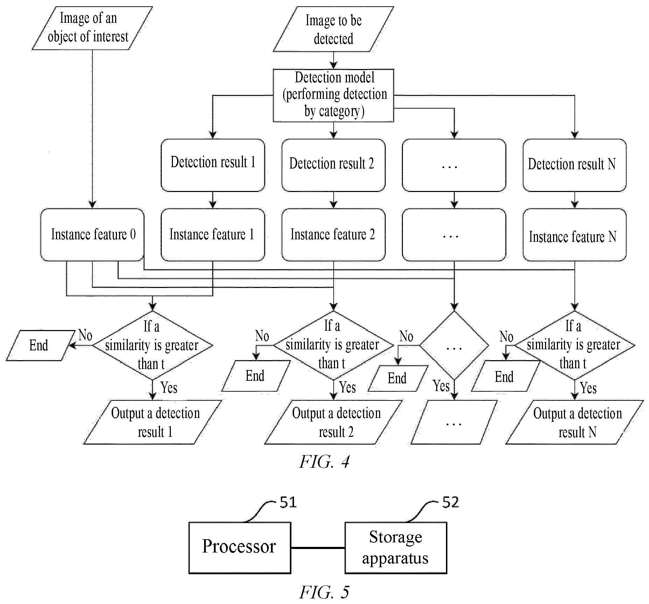

In another implementation, as specifically shown in FIG. 4, the image to be detected (including M detection objects) is first input into the detection model, to obtain M detection results (each detection result includes a category, a probability, and a detection box of an object), and a detection result whose category and probability do not meet a requirement is eliminated from the M detection results, to obtain the first detection result (including N detection results). Then, each detection object is extracted from the image to be detected based on the detection box, and is input into the feature extraction model, to obtain the first feature (there are N first features in total) corresponding to each detection object; and the object image is also input into the feature extraction model, to obtain the second feature corresponding to an object detection object. The cosine similarity between each first feature and the second feature is separately calculated, and the second detection result is determined by using the comparison result between the cosine similarity and the second threshold. For example, the detection result whose cosine similarity is less than the second threshold is eliminated from a first result, to obtain the second detection result. In this way, an object with a particular appearance mode or a particular object is detected, and object detection precision is improved.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the foregoing embodiment of the disclosure may also be implemented by a computer program instructing relevant hardware. The computer program may be stored in a computer-readable storage medium, and when the computer program is executed by a processor, the steps of the foregoing method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides an electronic device. In the electronic device embodiment according to the disclosure, as shown in FIG. 5, the electronic device includes at least one processor 51 and at least one storage apparatus 52. The storage apparatus may be configured to store a program for performing the object detection method in the above method embodiment. The processor may be configured to execute the program in the storage apparatus. The program includes but is not limited to a program for performing the object detection method in the above method embodiment. For ease of description, only parts related to the embodiments of the disclosure are shown. For specific technical details that are not disclosed, refer to the method part of the embodiments of the disclosure.

In this embodiment of the disclosure, the electronic device may be a control apparatus device formed by various devices. In some possible implementations, the electronic device may include a plurality of storage apparatuses and a plurality of processors. The program for performing the object detection method in the above method embodiment may be divided into a plurality of segments of subprograms, and the subprograms may be separately loaded and executed by the processor to perform different steps of the object detection method in the above method embodiment. Specifically, the subprograms may be separately stored in different storage apparatuses. Each processor may be configured to execute the program in one or more storage apparatuses, to jointly implement the object detection method in the above method embodiment. That is, each processor separately performs different steps of the object detection method in the above method embodiment, to jointly implement the object detection method in the above method embodiment.

The plurality of processors may be processors deployed on a same device. For example, the electronic device may be a high-performance device including a plurality of processors, and the plurality of processors may be processors configured on the high-performance device. In addition, the plurality of processors may alternatively be processors deployed on different devices. For example, the electronic device may be a server cluster, and the plurality of processors may be processors on different servers in the server cluster.

Further, the disclosure further provides a computer-readable storage medium. In the computer-readable storage medium embodiment according to the disclosure, the computer-readable storage medium may be configured to store a program for performing the object detection method in the above method embodiment, and the program may be loaded and executed by a processor to implement the above object detection method. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, the disclosure further provides a vehicle. The vehicle includes a vehicle body, at least one processor, and at least one storage apparatus, where the storage apparatus is configured to store a plurality of program codes, wherein the program codes are adapted to be loaded and executed by the at least one processor to perform the above object detection method.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. An object detection method, wherein the method comprises:
obtaining an image to be detected and an object image;
detecting the image to be detected, to obtain a first detection result; and
obtaining a second detection result based on the first detection result and the object image.

2. The object detection method according to claim 1, wherein the detecting the image to be detected, to obtain a first detection result comprises:
inputting the image to be detected into a detection model, to obtain a third detection result; and
filtering the third detection result based on the object image, to obtain the first detection result.

3. The object detection method according to claim 2, wherein the third detection result comprises a detection result of each detection object in the image to be detected, and the detection result of each detection object comprises a category and a probability; and
the filtering the third detection result based on the object image, to obtain the first detection result comprises:
determining whether the category of each detection object in the third detection result is the same as the category of the object image;
if the category of each detection object in the third detection result is not the same as the category of the object image, eliminating a detection result different from the category of the object image from the third detection result;
comparing the probability of the detection object in the third detection result with a first threshold; and
determining the first detection result based on a comparison result.

4. The object detection method according to claim 3, wherein the determining the first detection result based on a comparison result comprises: when the probability of the detection object is less than the first threshold, eliminating the detection result of the detection object from the third detection result, to obtain the first detection result.

5. The object detection method according to any one of claims 1 to 4, wherein the first detection result comprises a detection box of a detection object; and the obtaining a second detection result based on the first detection result and the object image comprises:
extracting, based on the detection box, each detection object image from the image to be detected; and
determining the second detection result based on a similarity between each detection object image and the object image.

6. The object detection method according to claim 5, wherein the determining the second detection result based on a similarity between each detection object image and the object image comprises:
inputting each detection object image into a feature extraction model, to obtain a first feature of each detection object image;
inputting the object image into the feature extraction model, to obtain a second feature of the object image; and
performing feature matching based on the first feature and the second feature, and determining the second detection result based on a matching result.

7. The object detection method according to claim 6, wherein the performing feature matching based on the first feature and the second feature, and determining the second detection result based on a matching result comprises:
determining a cosine similarity based on the first feature and the second feature;
determining whether the cosine similarity is less than a second threshold; and
if the cosine similarity is less than the second threshold, eliminating a detection result of a detection object corresponding to the cosine similarity from the first detection result, to obtain the second detection result.

8. An electronic device, comprising at least one processor and at least one storage apparatus, wherein the storage apparatus is configured to store a plurality of program codes, wherein the program codes are adapted to be loaded and executed by the at least one processor to perform the object detection method according to any one of claims 1 to 7.

9. A computer-readable storage medium, storing a plurality of program codes, wherein the program codes are adapted to be loaded and executed by the at least one processor to perform the object detection method according to any one of claims 1 to 7.

10. A vehicle, wherein the vehicle comprises a vehicle body, at least one processor, and at least one storage apparatus, the storage apparatus is configured to store a plurality of program codes, wherein the program codes are adapted to be loaded and executed by the at least one processor to perform the object detection method according to any one of claims 1 to 7.
